**Europäisches Patentamt**

**European Patent Office**

**Office européen des brevets**

(19)

(11) Veröffentlichungsnummer: **0 346 958**

**A2**

# (12) EUROPÄISCHE PATENTANMELDUNG

(21) Anmeldenummer: **89201268.3**

(22) Anmeldetag: **19.05.89**

(51) Int. Cl.⁴: **G02B 6/44**

The application is published incomplete as filed (Article 93 (2) EPC). The point in the description or the claim(s) at which the omission obviously occurs has been left blank.

(30) Priorität: **21.05.88 DE 3817398**

(43) Veröffentlichungstag der Anmeldung: **20.12.89 Patentblatt 89/51**

(84) Benannte Vertragsstaaten: **DE FR GB IT**

(71) Anmelder: **Philips Patentverwaltung GmbH Wendenstrasse 35 Postfach 10 51 49 D-2000 Hamburg 1(DE)**

(84) **DE**

Anmelder: **N.V. Philips' Gloeilampenfabrieken Groenewoudseweg 1 NL-5621 BA Eindhoven(NL)**

(84) **FR GB IT**

(72) Erfinder: **Wehner, Roderich Buchheimerstrasse 25 D-5000 Köln 80(DE)** Erfinder: **Kumpf, Friedhelm Arnufstrasse 11 D-5000 Köln 41(DE)**

(74) Vertreter: **Koch, Ingo, Dr.-Ing. et al Philips Patentverwaltung GmbH Wendenstrasse 35 Postfach 10 51 49 D-2000 Hamburg 1(DE)**

(54) **Vorrichtung zur Herstellung eines tordierten, aus mindestens zwei Mehrfach-Lichtwellenleiter-Flachbändern bestehenden Stapels.**

(57) Die Erfindung bezieht sich auf eine Vorrichtung zur Herstellung eines tordierten, aus mindestens zwei Mehrfach-Lichtwellenleiter-Flachbändern (LWL-Bänder) bestehenden Stapels, mit Aufnahmeeinrichtungen für aufgewickelte LWL-Bänder enthaltende Vorratsspulen und mit einer gegenüber einem raumfesten Tordierlager drehbaren, die LWL-Bänder führenden Tordiereinrichtung. Auch bei hohen Tordierdrehzahlen wird ein einwandfreier und die LWL-Bänder nicht unzulässig belastender Abwickelvorgang dadurch ermöglicht, daß die Vorratsspulen (8,9) um eine gemeinsame raumfeste Achse (21) mit vorgebbarer Bremskraft drehbar sind, und daß die Tordiereinrichtung mindestens ein um die raumfeste Drehachse (21) der Vorratsspulen (8,9) drehbarer, die Vorratsspulen (8,9) umgreifender und Umlenkungsführungen (31 bis 34) für LWL-Bänder (16,17) enthaltender Tordierflügel (10) ist.

Fig.1

# Vorrichtung zur Herstellung eines tordierten, aus mindestens zwei Mehrfach-Lichtwellenleiter-Flachbändern bestehenden Stapels.

Die Erfindung bezieht sich auf eine Vorrichtung zur Herstellung eines tordierten, aus mindestens zwei Mehrfach-Lichtwellenleiter-Flachbändern (LWL-Bändern) bestehenden Stapels, mit Aufnahmeeinrichtungen für aufgewickelte LWL-Bänder enthaltende Vorratsspulen und mit einer gegenüber einem raumfesten Tordierlager drehbaren, die LWL-Bänder führenden Tordiereinrichtung.

Bei einer durch die US-PS 41 29 468 bekannten Vorrichtung dieser Art sind die Vorratsspulen innerhalb eines rotierenden Verseilkorbs neben dessen Drehachse angeordnet. Dabei wirken bereits bei ralativ niedrigen Drehzahlen des Verseilkorbs erhebliche Fliehkräfte auf die Vorratsspulen und die darauf gewickelten LWL-Bänder ein. Da die LWL-Bänder relativ lose aufgewickelt werden müssen, können sie infolge der Fliehkräfte verrutschen, so daß dann ein einwandfreies Abwickeln nicht mehr möglich ist.

Der Erfindung liegt die Aufgabe zugrunde, eine Vorrichtung der eingangs genannten Art derart zu gestalten, daß selbst bei hohen Tordierdrehzahlen ein einwandfreier und die LWL-Bänder nicht unzulässig belastender Abwickelvorgang möglich ist.

Die Lösung gelingt dadurch, daß die Vorratsspulen um eine gemeinsame raumfeste Achse mit vorgebbarer Bremskraft drehbar sind, und daß die Tordiereinrichtung mindestens ein um die raumfeste Drehachse der Vorratsspulen drehbarer, die Vorratsspulen umgreifender und Umlenkungsführungen für LWL-Bänder enthaltender Tordierflügel ist.

Für die Erfindung prinzipiell geeignete Vorrichtungen sind an sich für die Verseilung der Leiter eines elektrischen Kabels bekannt (DE-OS 30 40 974). Solche Vorrichtungen sind zwar im Vergleich zur nach der US-PS 41 29 468 bekannten Art aufwendiger. Erfindungsgemäß wurde jedoch erkannt, daß insgesamt gesehen wegen der möglichen höheren Fertigungsgeschwindigkeit und wegen des störungsfreieren Fertigungsablaufs eine wirtschaftlichere Herstellung eines mit dem tordierten LWL-Bandstapel aufgebauten Kabels möglich ist.

Es hat sich weiterhin als besonders vorteilhaft erwiesen, daß die Vorratsspulen für die LWL-Bänder zwischen Stirnflanschen einen Wickelraum aufweisen, dessen axiale Breite geringfügig größer als die Breite eines LWL-Bandes ist. Bei bisher verwendeten axial breiten Spulen, auf welche mehrere LWL-Bandwindungen nebeneinander aufgewickelt sind, ergeben sich insbesondere bei schnellem Abwickeln Störungen durch Ineinanderrutschen von benachbarten Windungen. Dadurch entstehen Verklemmungskräfte, welche das LWL-Band unzulässig beanspruchen und im Extremfall zu Brüchen einzelner LWL eines Bandes führen können. Da solche Fehler meist erst nach Integration eines tordierten Bandstapels in ein optisches Kabel festgestellt werden, werden dadurch hohe Ausschußkosten verursacht. Wenn die LWL-Bänder jedoch spiralig auf entsprechend schmale Spulen aufgewickelt sind, können derartige Schwierigkeiten vollständig vermieden werden. Allerdings ergeben sich dann Vorratsspulen mit relativ großem Durchmesser. In Verbindung mit einer erfindungsgemäß vorgeschlagenen Vorrichtung, bei welcher die Vorratsspulen lediglich um ihre Mittelachse rotieren, wirkt sich der große Spulendurchmesser jedoch nicht nachteilig aus.

Da LWL-Bänder mit besonders gleichmäßiger Abzugskraft abgewickelt werden müssen, ist als bevorzugte Lösung vorgesehen, daß jeder Vorratsspule zur Erzielung der Bremskraft ein eigener Antriebsmotor zugeordnet ist. Mit einem Antriebsmotor lassen sich die Bremskräfte schneller und genauer einstellen, als mit bisher verwendeten einfachen Bremsen.

LWL-Bandstapel enthalten vornehmlich eine Vielzahl von aufeinanderliegenden LWL-Flachbändern. Wenn dementsprechend z.B. 10 Vorratsspulen axial hintereinander angeordnet werden müssen, wäre ein allen Spulen gemeinsamer Tordierflügel sehr lang und müßte mechanisch aufwendig gestaltet werden. Deshalb wird bevorzugt, daß bei einer Vielzahl von miteinander zu tordierenden LWL-Bändern mehrere mit synchroner Drehzahl angetriebene und jeweils auf einer separaten Welle gelagerte Tordierflügel vorgesehen sind, welche einer Gruppe von mindestens zwei Vorratsspulen zugeordnet sind. Der Gleichlauf der Tordierflügel wird vorzugsweise durch nach Art einer elektrischen Welle gekoppelte elektromotorische Einzelantriebe erreicht.

Das Einlegen der Vorratsspulen ist besonders einfach, wenn die Vorratsspulen axial auf Halterotoren aufsetzbar sind, welche auf einem freien Ende einer Welle gelagert sind. Dabei können auf beiden Enden einer im mittleren Bereich eines Lagerbocks gehaltenen Welle Vorratsspulen und/oder ein Tordierflügel drehbar gelagert sein.

Eine besonders einfache konstruktive Lösung ist dadurch gekennzeichnet, daß die Halterotoren für die Vorratsspulen einander koaxial umfassend gelagert sind und an ihren Enden Antriebselemente zur Drehkopplung mit je einem Antriebsmotor aufweisen.

Vorzugsweise sind einem Tordierflügel Gruppen mit je zwei Vorratsspulen zugeordnet. Dann sind die motorischen Einzelantriebe für die Vorratsspulen und die Tordierflügel relativ einfach gestaltbar. Ferner sind die Schwungmassen der einzelnen Tordierflügel relativ klein, so daß sie mit hoher Drehzahl umlaufen dürfen.

Eine nur geringe Beanspruchung der LWL-Bänder beim Abwickelvorgang ergibt sich dadurch, daß die Wellen zur Lagerung des bzw. der Tordierflügel und der Vorratsspulen Hohlwellen sind, durch welche die LWL-Bänder zu einem Tordierlager geführt sind, weil hohe Fliehkräfte dann auf dem Wege bis zum Tordierlager nur auf kleinen Längenabschnitten einwirken.

Die Erfindung und ihre Vorteile werden anhand der Beschreibung eines in der Zeichnung dargestellten vorteilhaften Ausführungsbeispiels näher erläutert.

Fig. 1 zeigt einen Längsschnitt durch einen Teil einer erfindungsgemäßen Vorrichtung.

Fig. 2 zeigt perspektivisch die Ablaufführung zweier LWL-Bänder von zwei Vorratsspulen.

An einem gemeinsamen Fundament 1 sind Lagerböcke 2,3 und 4 sowie weitere nicht dargestellte angeordnet, in welche Hohlwellen 5,6 und 7 drehfest eingefügt sind. Zwischen zwei benachbarten Lagerböcken sind jeweils zwei Vorratsspulen 8 und 9 sowie ein zugehöriger Tordierflügel 10 drehbar. Der Enddrehflügel 11 ist mit dem Hohlwellenansatz 12 im Endlagerbock 13 gelagert. Durch den Hohlwellenansatz 12 werden sämtliche LWL-Bänder 14 bis 19 und 20 geleitet, welche von den dargestellten Vorratsspulen 8 und 9 und von weiteren nicht gezeichneten gleichartigen Vorratsspulen kommen.

Diese LWL-Bänder werden um die Drehachse 21 tordiert und durch das Tordierlager 34 geführt, wo ein kompakter tordierter Stapel 22 gebildet wird. Dieser Stapel 22 wird nachfolgend durch nicht dargestellte weitere Fertigungseinrichtungen gezogen, insbesondere durch einen Extruder zur Aufbringung einer den Stapel 22 lose umgebenden Hülle.

Die Vorratsspulen 8 und 9 werden zunächst quer in den Freiraum 23 eingeschoben, welcher zwischen dem Tordierflügel 10 und der Hohlwelle 7 einerseits und der Hohlwelle 6 andererseits vorgesehen ist. Danach werden die Vorratsspulen 8 und 9 axial auf Halterotoren 24 bzw. 25 aufgeschoben und sind dort drehfest und lagegesichert gehalten.

Die um die Hohlwelle 6 koaxial drehbaren Halterotoren 24 und 25 sind durch Elektromotoren 26 bzw. 27 über Riementriebe 28 bzw. 29 mit vorbestimmtem Drehmoment antreibbar.

Der auf der benachbarten Hohlwelle 7 gelagerte Tordierflügel 10 ist durch den Elektromotor 30 über einen Riementrieb 31 angetrieben. Die Elektromotoren 30 sämtlicher Tordierflügel 10 sind nach Art einer elektrischen Welle gekoppelt, so daß sie mit synchroner Geschwindigkeit drehen.

Mit den Tordierflügeln 10 sind jeweils mitrotierende Umlenkrollen 31,32,33 und 34 verbunden, durch welche die LWL-Bänder 16 bzw. 17, welche von den Vorratsspulen 8 bzw. 9 abgezogen werden, in Richtung auf das Tordierlager 34 geführt werden. Die Abzugsgeschwindigkeit in Richtung des Pfeils 35 wird durch eine nicht dargestellte folgende Abzugseinrichtung vorgegeben, die Abzugskraft dagegen durch entsprechende Steuerung der Antriebsmotoren 30 bzw. 31.

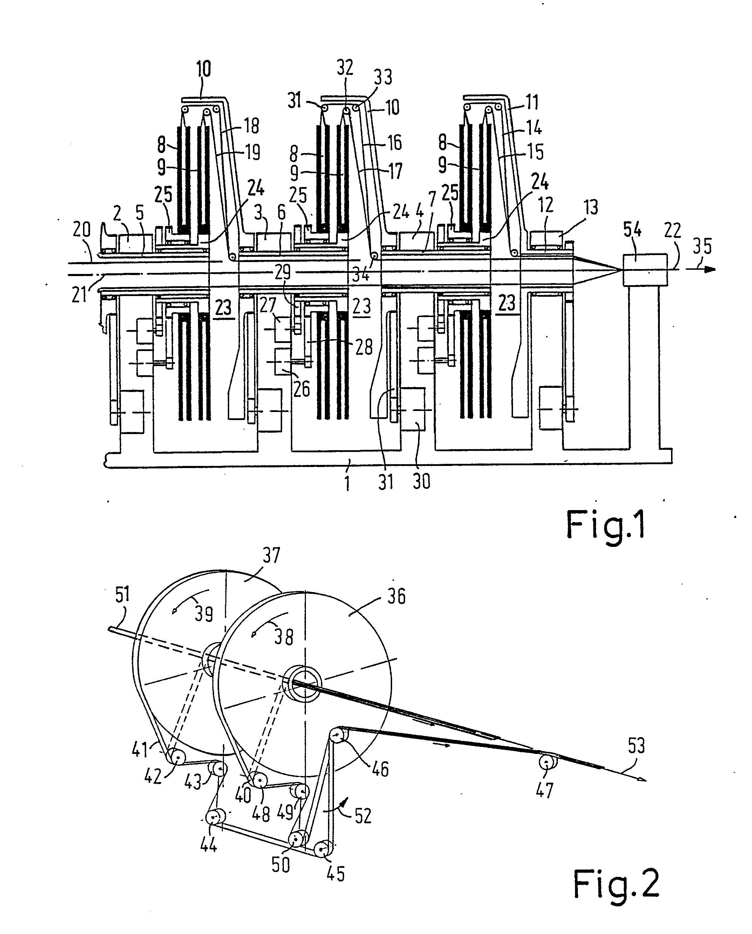

Der Abwickel- und Tordiervorgang wird anhand der schematischen perspektivischen Darstellung in Fig. 2 näher erläutert. Dort sind zwei Vorratsspulen 36 und 37 angedeutet, welche in Richtung der Pfeile 38 bzw. 39 angetrieben werden. Ebenso wie die Vorratsspulen 8 und 9 nach Fig.1 weisen auch diese einen schmalen Wickelraum auf, welcher nur geringfügig breiter als die Breite eines spiralig aufgewickelten LWL-Bandes 40 bzw. 41 ist. Das LWL-Band 41 wird über Umlenkrollen 42 bis 47 in Richtung auf ein in Fig. 2 nicht dargestelltes Tordierlager geführt, das LWL-Band 40 über Umlenkrollen 48,49,50 und ebenfalls über die Umlenkrollen 46 und 47. Die Umlenkrolle 47 führt zusätzlich die von nicht dargestellten weiteren Vorratsspulen in gleicher Weise abgewickelten LWL-Bänder 51.

Mit Ausnahme der Umlenkrolle 47 sind alle übrigen der in Fig. 2 dargestellten Umlenkrollen an einem den Vorratsspulen 36 und 37 zugeordneten Tordierflügel gelagert. Die Umlenkrolle 47 ist dagegen an einem benachbarten mit gleicher Drehzahl in Richtung des Pfeils 52 angetriebenen Tordierflügel gelagert.

Die Vorratsspulen 36 und 37 und der zugehörige Tordierflügel werden in gleicher Drehrichtung aber mit entsprechend der Abzugsgeschwindigkeit der LWL-Bänder 40 und 41 unterschiedlicher Drehzahl angetrieben. Die Abzugsgeschwindigkeit in Richtung des Pfeils 53 wird von einer nicht dargestellten Abzugseinrichtung vorgegeben, das Ausmaß der Tordierung durch die Drehzahl der Tordiereinrichtung und die Abzugskraft durch die Steuerung der Antriebsmotoren für die Vorratsspulen.

Da jeder einzelnen Vorratsspule ein eigener Antriebsmotor zugeordnet ist, können die Abzugskräfte individuell und erforderlichenfalls auf unterschiedliche konstante Werte geregelt werden.

Mit einer erfindungsgemäßen Vorrichtung können ohne weiteres störungsfrei Drehzahlen des Tordierflügels von bis zu 300 min$^{-1}$ zugelassen werden, wodurch sich im Tordierlager Durchzugsgeschwindigkeiten bis zu 30 m/min ergeben.

**Ansprüche**

1. Vorrichtung zur Herstellung eines tordierten, aus mindestens zwei Mehrfach-Lichtwellenleiter-Flachbändern (LWL-Bänder) bestehenden Stapels, mit Aufnahmeeinrichtungen für aufgewickelte LWL-Bänder enthaltende Vorratsspulen und mit einer gegenüber einem raumfesten Tordierlager drehbaren, die LWL-Bänder führenden Tordiereinrichtung, dadurch gekennzeichnet, daß die Vorratsspulen (8,9) um eine gemeinsame raumfeste Achse (21) mit vorgebbarer Bremskraft drehbar sind, und daß die Tordiereinrichtung mindestens ein um die raumfeste Drehachse (21) der Vorratsspulen (8,9) drehbarer, die Vorratsspulen (8,9) umgreifender und Umlenkungsführungen (31 bis 34) für LWL-Bänder (16,17) enthaltender Tordierflügel (10) ist.

2. Vorrichtung nach Anspruch 1, dadurch gekennzeichnet, daß die Vorratsspulen (8,9) für die LWL-Bänder (16,17) zwischen Stirnflanschen einen Wickelraum aufweisen, dessen axiale Breite geringfügig größer als die Breite eines LWL-Bandes (16,17) ist.

3. Vorrichtung nach Anspruch 1 oder 2, dadurch gekennzeichnet, daß jeder Vorratsspule (8,9) zur Erzielung der Bremskraft ein eigener Antriebsmotor (26,27) zugeordnet ist.

4. Vorrichtung nach einem der Ansprüche 1 bis 3, dadurch gekennzeichnet, daß bei einer Vielzahl von miteinander zu tordierenden LWL-Bändern (14 bis 20) mehrere mit synchroner Drehzahl angetriebene (Motoren 30)

Fig.1

Fig.2

PHD 88-105